Europäisches Patentamt

(19) **European Patent Office**

**Office européen des brevets**

(11) Numéro de publication : **0 139 573 B1**

(12) **FASCICULE DE BREVET EUROPÉEN**

(45) Date de publication du fascicule du brevet :
06.05.87

(51) Int. Cl.⁴ : **B 01 D 9/02**

(21) Numéro de dépôt : **84401940.6**

(22) Date de dépôt : **27.09.84**

(54) **Procédé et dispositif de cristallisation à recyclage axial de niveau réglable.**

(30) Priorité : **28.09.83 FR 8315427**

(43) Date de publication de la demande :
**02.05.85 Bulletin 85/18**

(45) Mention de la délivrance du brevet :
**06.05.87 Bulletin 87/19**

(84) Etats contractants désignés :
**BE DE IT LU NL**

(56) Documents cités :
**WO-A-82 /004 59**
**FR-A- 1 067 269**
**FR-A- 1 583 698**
**FR-A- 2 028 623**
**NL-A- 6 902 624**
**US-A- 2 384 747**
**US-A- 2 555 340**

(73) Titulaire : **SWENSON S.A.**
**22, rue Saint-Augustin**
**F-75002 Paris (FR)**

(72) Inventeur : **Malfand, Michel**
**53, rue Victor Hugo**
**F-91210 Draveil (FR)**

(74) Mandataire : **Peuscet, Jacques**
**Cabinet Peuscet 68, rue d'Hauteville**
**F-75010 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à un procédé et à un dispositif de cristallisation d'une solution cristallisable d'un produit soluble, notamment d'un produit hydrosoluble, qui sont susceptibles d'avoir de multiples applications au sein d'installations industrielles ou d'installations pilotes.

Un procédé de cristallisation bien connu, actuellement mis en œuvre dans des cristallisoirs de type classique, utilisés dans des installations industrielles ou pilotes, consiste à introduire, dans un cristallisoir d'axe vertical, un certain volume d'une solution à cristalliser portée à une température voisine de sa température d'évaporation pour la pression réduite établie dans le cristallisoir ; à entretenir ladite pression réduite au-dessus de la surface libre de la solution à cristalliser dans le cristallisoir, de façon à favoriser la formation de vapeur au-dessus de la surface libre de la solution et la formation de cristaux dans la solution ; à recycler en continu la solution à cristalliser, en la faisant sortir en partie basse du cristallisoir, en la réchauffant ensuite dans un échangeur thermique, dans lequel la solution est en condition d'échange thermique avec de la vapeur collectée en partie haute du cristallisoir et recomprimée, et en réintroduisant enfin la solution réchauffée dans le cristallisoir, légèrement sous le niveau de la surface libre de la solution dans le cristallisoir ; et à prélever, en partie basse du cristallisoir, les cristaux formés en les séparant par filtration de la solution.

Ce procédé connu consiste donc à favoriser le déroulement en continu d'un phénomène communément désigné par les termes de « flash d'évaporation en surface », par lequel l'évaporation du liquide au-dessus de la surface libre du volume de solution présent dans le cristallisoir s'accompagne d'une formation de cristaux du produit dissous dans la solution, et d'une baisse de la température de la solution. Cette baisse de température doit être compensée, pour que le processus se poursuive, et cette compensation thermique est assurée par une recirculation et un réchauffage continus de la solution à cristalliser en prélevant la quantité de chaleur nécessaire dans la vapeur collectée au-dessus de la surface libre du volume de solution présent dans le cristallisoir, après recompression mécanique de cette vapeur.

Ce procédé connu est mis en œuvre par des dispositifs de type classique comprenant :

un cristallisoir, ayant, de préférence, la forme d'une cuve fermée, de révolution autour d'un axe vertical, présentant des parties inférieure et supérieure convergentes, ce cristallisoir étant destiné à contenir un volume de solution à cristalliser porté à une température voisine de sa température d'ébullition pour la pression établie dans l'appareil, le niveau de la surface libre de la solution dans le cristallisoir s'établissant entre les parties inférieure et supérieure du cristallisoir ;

un dispositif de mise en dépression, relié à la partie supérieure du cristallisoir, au-dessus de la surface libre de la solution ;

une canalisation d'évacuation de vapeur, débouchant dans la partie supérieure du cristallisoir et raccordée à un échangeur thermique de réchauffage ;

une pompe de recompression, montée sur la canalisation d'évacuation de vapeur, et destinée à assurer la recompression mécanique de la vapeur collectée à la partie supérieure du cristallisoir avant de la faire pénétrer dans l'échangeur thermique ;

une canalisation de recyclage de la solution, qui débouche par son entrée dans la partie inférieure du cristallisoir et par sa sortie dans le cristallisoir, entre les parties inférieure et supérieure de ce dernier, et sur laquelle est montée l'échangeur thermique de réchauffage, la solution reprise par la canalisation de recyclage à la partie inférieure du cristallisoir étant réchauffée par la vapeur comprimée avant d'être réintroduite dans le cristallisoir ; et

un organe de séparation des cristaux alimenté en solution provenant de la partie inférieure du cristallisoir par une conduite de piquage, et relié à une conduite d'évacuation des cristaux ainsi qu'à une conduite de réinjection de la solution séparée des cristaux par ledit organe.

Dans ces dispositifs connus, et selon le procédé connu, la réalimentation du cristallisoir en solution recyclée et réchauffée est assurée par une canalisation qui arrive tangentiellement dans le cristallisoir, perpendiculairement à l'axe vertical de ce dernier, et légèrement sous le niveau de la surface libre de la solution contenue dans le cristallisoir.

Il est également bien connu que la taille des cristaux que l'on peut obtenir dans un tel dispositif est liée au temps de rétention des cristaux dans le cristallisoir.

Afin de modifier le temps de rétention et donc la taille des cristaux produits, ainsi que le rendement du cristallisoir, il est donc connu de modifier le volume contenu dans le cristallisoir. Mais si l'on élève le niveau de la surface libre du liquide dans un cristallisoir à arrivée tangentielle de la solution recyclée, on obtient que la réalimentation n'est plus assurée juste sous la surface libre de la solution, en raison de l'élévation au niveau de cette surface libre dans le cristallisoir. Ceci a pour conséquence que le flux de solution recyclée et réchauffée, qui est réintroduit dans le cristallisoir, ne se mélange plus uniformément dans la masse de la solution présente dans le cristallisoir, mais tend à s'écouler, au travers de cette masse liquide, directement vers l'entrée de la canalisation de recyclage qui reprend la solution à la partie inférieure du cristallisoir.

Il en résulte que la température de la solution conduite à l'échangeur augmente.

L'échange thermique dans l'échangeur n'est alors plus suffisant pour assurer une compensation convenable, car l'écart de température entre les deux fluides de l'échangeur est réduit ; la masse de solution présente dans le cristallisoir n'est donc plus maintenue à une température suffisante. Il devient dès lors indispensable d'augmenter la recompression mécanique de la vapeur, afin d'augmenter la température de cette dernière à l'entrée de l'échangeur. Mais ceci ne peut être obtenu qu'au prix d'une consommation énergétique très importante.

En conséquence, dans les dispositifs connus, à recyclage tangentiel, toute action entreprise en vue d'augmenter l'efficacité du fonctionnement d'un cristallisoir, en modifiant le niveau de la surface libre de la solution dans ce cristallisoir, conduit à perturber défavorablement le procédé mis en œuvre sur le plan des échanges thermiques, et donc sur le plan de la recompression mécanique nécessaire et du coût opératoire.

L'invention a pour but de remédier à cet inconvénient majeur, en évitant que le flux de réalimentation du cristallisoir en solution recyclée et réchauffée puisse passer directement de la sortie à l'entrée de la canalisation de recyclage et en assurant qu'il soit toujours favorablement réparti dans toute la masse liquide présente dans le cristallisoir.

Un autre but de l'invention est de permettre, dans un cristallisoir de construction donnée, de rechercher l'efficacité optimale, c'est-à-dire le meilleur rendement de cristallisation, sans que cela n'entraîne une répercussion au niveau des échanges thermiques dans l'échangeur de réchauffage, et par conséquent sans entraîner une quelconque modification de la recompression mécanique de la vapeur qui alimente l'échangeur thermique.

L'invention a enfin pour but de permettre un réglage facile des conditions de fonctionnement d'une installation industrielle ou une modification rapide et simple d'une installation pilote.

A cet effet, l'invention a pour objet un procédé du type présenté ci-dessus, et qui se caractérise par le fait qu'il consiste, de plus, à assurer une réintroduction sensiblement verticale de la solution recyclée dans le volume de solution contenu dans le cristallisoir, et à maintenir cette réintroduction légèrement sous la surface libre de la solution dans le cristallisoir, quelque soit le niveau de cette surface libre dans le cristallisoir. Une telle réalimentation verticale maintenue légèrement sous la surface libre de la solution dans le cristallisoir, conformément à l'invention, assure tout à la fois une excellente répartition de la solution réchauffée et réintroduite dans le cristallisoir, à travers tout le volume de solution présent dans ce dernier, et un temps de rétention qui peut être modifié à volonté, sans conséquence défavorable sur la consommation énergétique liée à la recompression de la vapeur.

Comme dans le procédé connu, la récupération des cristaux peut être assurée par un piquage sur la solution recyclée, à la sortie en partie basse du cristallisoir, et la solution séparée des cristaux étant ré-injectée dans la solution recyclée, avant son passage dans l'échangeur thermique. La séparation des cristaux peut se faire par tout moyen approprié, par exemple, par filtration ou centrifugation. De préférence, selon une caractéristique propre à l'invention, le procédé consiste de plus à collecter et à décanter les cristaux, en partie basse du cristallisoir, dans une jambe de cristallisation, à récupérer les cristaux par un piquage sur la jambe de cristallisation, entre les deux extrémités de cette dernière, et à réinjecter la solution séparée des cristaux dans l'extrémité inférieure de la jambe de cristallisation, afin de créer un léger contre-courant qui fait remonter les cristaux trop fins dans le cristallisoir.

L'invention a également pour objet un dispositif du type présenté ci-dessus et aménagé pour la mise en œuvre du procédé selon l'invention, ce dispositif se caractérisant par le fait que la sortie de la canalisation de recyclage est délimitée par un embout, qui est disposé dans le cristallisoir et débouche vers le haut dans ce dernier, le dispositif comprenant également au moins un prolongateur de mise à niveau, destiné à être raccordé, en cas de besoin, sur l'embout afin que la solution recyclée soit réintroduite dans le volume de solution présent dans le cristallisoir légèrement au-dessous du niveau de la surface libre de ce volume de solution dans le cristallisoir.

Quand le cristallisoir a une structure de révolution, on préfère que l'embout de la canalisation de recyclage soit disposé selon l'axe du cristallisoir.

Ainsi, si l'on veut faire varier la hauteur du niveau de la surface libre de la masse liquide dans le cristallisoir, pour agir sur le rendement de cristallisation, il suffit de monter sur l'extrémité supérieure de l'embout de la canalisation de recyclage, un prolongateur disposé selon l'axe vertical du cristallisoir et dont l'extrémité supérieure est située légèrement au-dessous de la nouvelle surface libre de la masse liquide contenue dans le cristallisoir.

Le dispositif peut comprendre plusieurs prolongateurs axiaux, éventuellement identiques les uns aux autres, et destinés à être montés bout à bout sur l'embout, en fonction du niveau de la surface libre de la solution dans le cristallisoir ; avantageusement, afin de faciliter les opérations de mise à niveau, l'embout porte des moyens de solidarisation complémentaires de moyens de solidarisation portés par chaque prolongateur axial ; avantageusement, afin de permettre un empilement des prolongateurs, chacun d'entre eux porte également des moyens de solidarisation complémentaires de moyens de solidarisation portés par au moins un autre prolongateur axial.

Dans un tel dispositif, la conduite de piquage et la conduite de réinjection, qui sont associées à l'organe de séparation des cristaux, peuvent relier ledit organe à la canalisation de recyclage, entre le cristallisoir et l'échangeur thermique, la conduite de piquage débouchant alors dans la canalisation de recyclage en amont du point où la conduite de réinjection débouche dans cette canalisation. Mais, avantageusement, le dispositif comprend, de plus, une jambe de cristallisation, qui s'étend axialement sous le cristallisoir et débouche dans ce dernier par son extrémité supérieure, la conduite de piquage reliant l'organe de séparation à la jambe de cristallisation et débouchant dans la partie centrale de celle-ci, tandis que la conduite de réinjection relie ledit organe à l'extrémité inférieure de la jambe de cristallisation, dans laquelle elle débouche axialement afin de créer un contre-courant de lavage des cristaux collectés dans la jambe et de renvoi des cristaux trop fins dans le cristallisoir.

Pour mieux faire comprendre l'objet de l'invention, on va en décrire maintenant, à titre d'exemples purement illustratifs et non limitatifs, un mode de réalisation connu et des modes de réalisation propres à l'invention, représentés sur le dessin annexé.

Sur ce dessin :

la figure 1 est une représentation schématique d'un dispositif connu, pour la mise en œuvre d'un procédé connu de cristallisation ;

les figures 2 et 3 sont des représentations analogues à la figure 1 d'un premier et d'un second exemple de dispositif de cristallisation conforme à l'invention.

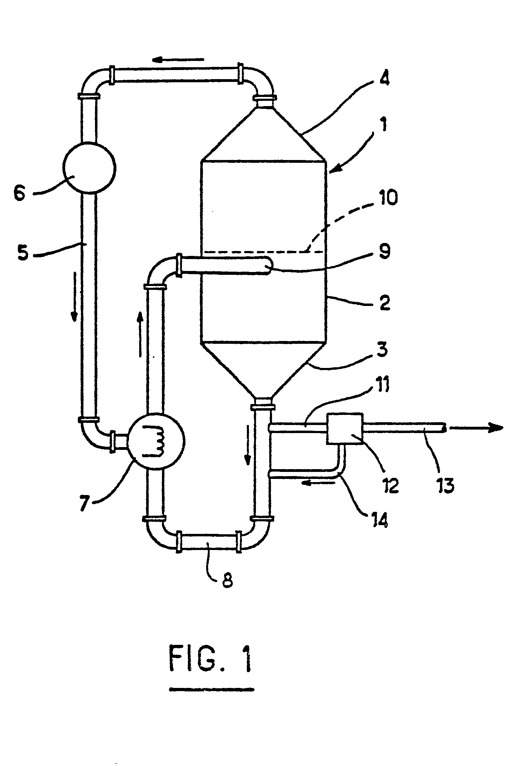

Le dispositif de cristallisation connu et représenté sur la figure 1 comprend un cristallisoir 1, constitué d'une partie centrale 2 cylindrique de section circulaire, ainsi que d'une partie inférieure 3 et d'une partie supérieure 4, qui sont chacune tronconique et raccordée à la partie centrale 2 par leur grande base. Par sa petite base, à l'extrémité supérieure du cristallisoir 1, la partie supérieure 4 se raccorde à l'entrée d'une canalisation de vapeur 5, sur laquelle est montée une pompe 6 de recompression mécanique de la vapeur, dont la sortie débouche dans un échangeur thermique 7. Par sa petite base, à l'extrémité inférieure du cristalliseur 1, la partie inférieure 3 se raccorde à l'entrée d'une canalisation de recyclage 8, qui est raccordée à l'échangeur thermique 7 et se prolonge, au delà de ce dernier, jusqu'à déboucher, par sa sortie 9, tangentiellement dans la partie centrale 2 du cristallisoir 1, perpendiculairement à l'axe vertical de ce dernier, et juste sous le niveau de la surface libre 10 (indiquée en pointillés) d'une masse de solution à cristalliser qui est contenue dans le cristallisoir 1. Cette solution est à une température voisine de sa température de vaporisation pour la pression qui règne dans le cristallisoir.

La pompe 6, en aspirant la vapeur qui se forme dans le cristallisoir 1, au-dessus de la surface libre 10, constitue un dispositif de mise en dépression, qui favorise la formation de vapeur, par le phénomène dit de « flash d'évaporation de surface ». Cette vapeur recomprimée par la pompe 6, est amenée ensuite en condition d'échange thermique dans l'échangeur 7, avec la solution qui est reprise à l'extrémité inférieure du cristallisoir 1 par la canalisation 8, de sorte que cette solution est réchauffée dans l'échangeur 7 puis est réintroduite dans le cristallisoir 1, afin de compenser la baisse de température de la masse liquide contenue dans le cristallisoir 1, en raison de la formation de vapeur.

Une conduite de piquage 11, débouchant dans la canalisation 8, juste sous le cristallisoir 1, amène une partie de la solution recyclée au filtre 12, qui assure la séparation des cristaux formés ; les cristaux sont évacués par la conduite 13, tandis que la solution récupérée dans le filtre 12 est réinjectée dans la canalisation 8 par la conduite 14, en aval du point de piquage de la conduite 11 sur la canalisation 8. Pour les raisons présentées ci-dessus, un tel dispositif a pour inconvénient que le niveau de la surface libre 10 ne peut pas être relevé dans le cristallisoir 1 sans entraîner une augmentation considérable de l'énergie consommée par l'ensemble.

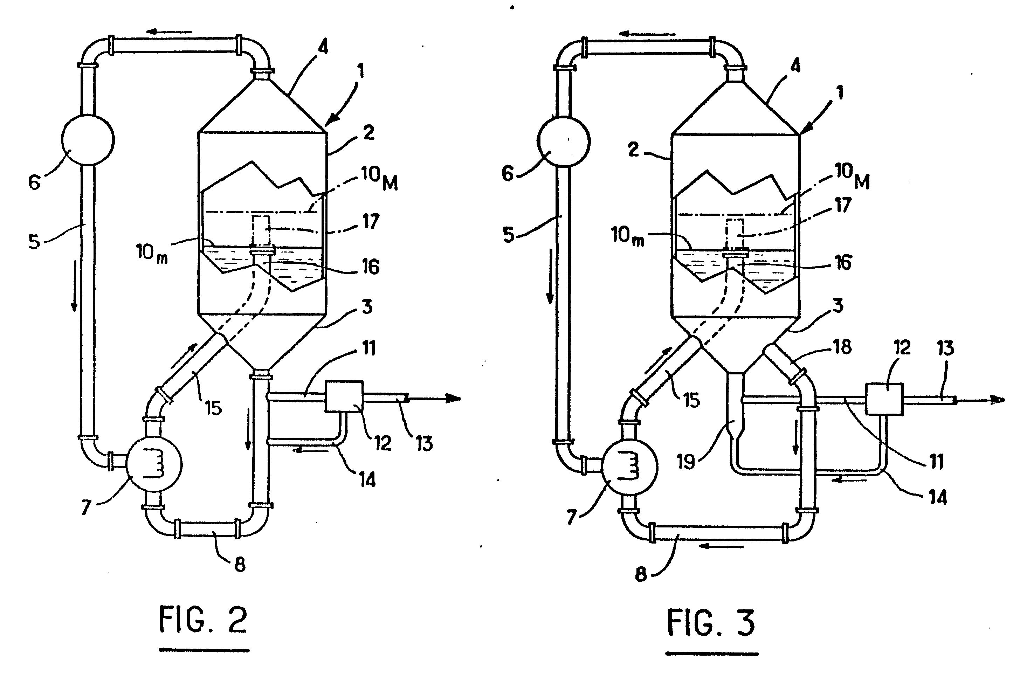

Le dispositif conforme à l'invention et représenté sur la figure 2 est identique au dispositif de la figure 1, sauf en ce qui concerne le retour de la canalisation de recyclage 8 dans le cristallisoir 1. Sur la figure 2, la canalisation de recyclage 8 est constituée, en aval de l'échangeur thermique 7, par un tronçon de réalimentation 15 qui traverse la paroi tronconique de la partie inférieure 3 du cristallisoir 1 et qui se termine par un embout 16 dirigé axialement vers le haut et débouchant, par son extrémité supérieure, juste sous le niveau minimal $10_m$ de la surface libre de la masse liquide contenue dans le cristallisoir 1, de sorte que la solution réintroduite dans ce dernier se répartit convenablement dans toute cette masse liquide.

Si l'on veut élever le niveau de la surface libre jusqu'en $10_M$, afin d'agir sur le rendement de cristallisation, on fixe sur l'extrémité supérieure de l'embout 16 un prolongateur axial 17, dont l'extrémité supérieure débouche juste sous le nouveau niveau de la surface libre $10_M$, afin de conserver l'avantage de la bonne répartition de la solution recyclée dans la masse liquide du cristallisoir 1, et d'obtenir, en plus, une augmentation du temps de rétention, ce qui correspond à une augmentation de la taille des cristaux, sans perturber les échanges thermiques dans l'échangeur 7 et donc sans perturber le fonctionnement de la pompe 6.

En fait, en fonction des besoins, un ou plusieurs prolongateurs tels que 17 peuvent être montés bout à bout sur l'embout 16.

Pour faciliter ces opérations de mise à niveau du recyclage du cristallisoir 1 par rapport à la surface libre de la masse liquide qu'il contient, les prolongateurs 17 sont identiques les uns aux autres et présentent chacun à leur extrémité inférieure des moyens de fixation rapide à l'extrémité supérieure de l'embout 16 ou à l'extrémité supérieure d'un prolongateur 17 déjà monté sur cet embout 16.

Le dispositif représenté sur la figure 3 est identique à celui de la figure 2, sauf en ce qui concerne la position de l'entrée de la canalisation de recyclage 8 et la récupération des cristaux. Dans cet exemple, la canalisation de recyclage 8 est constituée, en amont de l'échangeur thermique 7, d'un tronçon de reprise 18, qui se raccorde par son entrée à la paroi tronconique de la partie inférieure 3 du cristallisoir 1. Par sa petite base, à l'extrémité inférieure du cristallisoir 1, cette partie inférieure 3 se raccorde à l'extrémité supérieure d'une jambe de cristallisation axiale 19 ; la jambe 19 comporte une partie centrale cylindrique et se termine par une extrémité inférieure tronconique convergente. La conduite de repiquage 11 relie le filtre 12 à la jambe 19, dans laquelle elle débouche au niveau de la partie centrale de cette dernière ; la conduite de réinjection relie également le filtre 12 à la jambe 19, mais en débouchant axialement dans l'extrémité inférieure de cette dernière, de manière à créer un contre-courant par la réinjection de la solution récupérée dans le filtre 12 ; le contre-courant lave les cristaux collectés dans la jambe 19 et fait remonter les cristaux les plus fins dans le cristallisoir 1, alors que les plus gros cristaux sont emmenés vers le filtre 12 puis évacués par la conduite 13.

Il est bien entendu que les dispositifs ci-dessus décrits pourront donner lieu à toute modification désirable, sans sortir pour cela du cadre de l'invention.

## Revendications

1. Procédé de cristallisation d'une solution d'au moins un produit cristallisable dans lequel on introduit, dans un cristallisoir (1) la solution à cristalliser portée à une température voisine de sa température d'évaporation pour la pression réduite établie dans le cristallisoir ; on entretient cette pression réduite au-dessus de la surface libre (10) de la solution à cristalliser dans le cristallisoir (1) ; on recycle en continu la solution à cristalliser, en la faisant sortir en partie basse (3) du cristallisoir (1), en la réchauffant ensuite dans un échangeur thermique (7), dans lequel la solution est en condition d'échange thermique avec la vapeur collectée en partie haute (4) du cristallisoir (1) et recomprimée, et en réintroduisant enfin la solution réchauffée dans le cristallisoir (1), légèrement sous le niveau de la surface libre (10) de la solution dans le cristallisoir (1) ; et on prélève en partie basse du cristallisoir (1) les cristaux formés, en les séparant de la solution, caractérisé par le fait que l'on assure une réintroduction sensiblement verticale (16, 17) de la solution recyclée dans le volume de solution contenu dans le cristallisoir (1), et que l'on maintient cette réintroduction (16, 17) légèrement au-dessous de la surface libre ($10_m$, $10_M$) de la solution dans le cristallisoir (1), quel que soit le niveau de cette surface libre.

2. Procédé de cristallisation selon la revendication 1, caractérisé par le fait que l'on récupère les cristaux par un piquage (11) sur la solution recyclée (8), à la sortie en partie basse (3) du cristallisoir (1), et que l'on réinjecte (en 14) la solution séparée des cristaux (en 12) dans la solution recyclée (8), avant son passage dans l'échangeur thermique (7).

3. Procédé de cristallisation selon la revendication 1, caractérisé par le fait que l'on collecte les cristaux par décantation, en partie basse (3) du cristallisoir (1), dans une jambe de cristallisation (19) ; que l'on récupère les cristaux par un piquage sur la jambe de cristallisation (19), entre les deux extrémités de cette dernière, et que l'on réinjecte (en 14) la solution séparée des cristaux dans l'extrémité inférieure de la jambe de cristallisation (19), pour créer un léger contre-courant.

4. Dispositif pour la mise en œuvre du procédé selon l'une des revendications 1 à 3 comprenant :
   un cristallisoir (1),
   un dispositif (6) de mise en dépression relié à la partie supérieure (4) du cristallisoir (1), au-dessus de la surface libre (10) de la solution,
   une canalisation d'évacuation de vapeur (5) débouchant dans la partie supérieure (4) du cristallisoir (1) et raccordée à un échangeur thermique (7) de réchauffage,
   une pompe de recompression (6), montée sur la canalisation d'évacuation de vapeur (5) et destinée à assurer la recompression mécanique de la vapeur collectée à la partie supérieure (4) du cristallisoir (1) avant de la faire pénétrer dans l'échangeur thermique (7),
   une canalisation de recyclage (8) de la solution qui débouche par son entrée dans la partie inférieure (3) du cristallisoir (1) et par sa sortie dans le cristallisoir (1), entre les parties inférieure et supérieure (3, 4) de ce dernier, et sur laquelle est montée l'échangeur thermique (7) de réchauffage,
   un organe de séparation (12) des cristaux, alimenté en solution provenant de la partie inférieure (3) du cristallisoir (1) par une conduite de piquage (11), et relié à une conduite d'évacuation (13) des cristaux ainsi qu'à une conduite de réinjection (14) de la solution séparée des cristaux par ledit organe (12), caractérisé par le fait que la sortie de la canalisation de recyclage (8) est délimitée par un embout (16) qui est disposé dans le cristallisoir (1) et débouche vers le haut dans ce dernier, le dispositif comprenant également au moins un prolongateur (17) de mise à niveau, destiné à être raccordé, en cas de besoin, sur l'embout (16).

5. Dispositif selon la revendication 4, caractérisé par le fait que le cristallisoir (1) a la forme d'une cuve de révolution et que la sortie de la canalisation de recyclage (8) est disposée selon l'axe du cristallisoir (1).

6. Dispositif de cristallisation selon l'une des revendications 4 ou 5, caractérisé par le fait qu'il comprend plusieurs prolongateurs (17) destinés à être montés bout à bout sur l'embout (16), en fonction du niveau de la surface libre ($10_m$, $10_M$) de la solution dans le cristallisoir (1).

7. Dispositif de cristallisation selon l'une des revendications 4 à 6, caractérisé par le fait que l'embout (16) porte des moyens de solidarisation complémentaires de moyens de solidarisation portés par chaque prolongateur (17).

8. Dispositif de cristallisation selon les revendications 6 et 7 prises simultanément, caractérisé par le fait que chaque prolongateur (17) porte des moyens de solidarisation complémentaires de moyens de solidarisation portés par un autre prolongateur (17).

9. Dispositif de cristallisation selon l'une des revendications 4 à 8, caractérisé par le fait que la conduite de piquage (11) et la conduite de réinjection (14) relient l'organe de séparation (12) à la canalisation de recyclage (8), entre le cristallisoir (1) et l'échangeur thermique (7), la conduite de piquage (11) débouchant dans la canalisation de recyclage (8) en amont du point où la conduite de réinjection (14) débouche dans ladite canalisation (8).

10. Dispositif selon l'une des revendications 4 à 8, caractérisé par le fait qu'il comprend une jambe de cristallisation (19), qui s'étend sous le cristallisoir (1) et débouche dans ce dernier par son extrémité supérieure, la conduite de piquage (11) qui relie l'organe de séparation (12) à la jambe de cristallisation (19), débouchant dans la partie centrale de celle-ci, tandis que la conduite de réinjection (14) relie l'organe de séparation (12) à l'extrémité inférieure de la jambe de cristallisation (19), dans laquelle elle débouche axialement pour créer un contre-courant.

**Claims**

1. A process for the crystallization of a solution of at least one crystallizable product in which the solution to be crystallized is introduced into a crystallizer (1) at a temperature adjacent its temperature of evaporation under the reduced pressure prevailing in the crystallizer ; this reduced pressure is maintained above the free surface (10) of the solution to be crystallized in the crystallizer (1) ; the solution to be crystallized is continuously recycled by removal from the lower part (3) of the crystallizer (1), re-heating it subsequently in a heat exchanger (7) in which the solution is in a condition of heat exchange with the vapour collected from the upper part (4) of the crystallizer (1) and recompressed, and reintroduction of the re-heated solution finally into the crystallizer (1) slightly below the level of the free surface (10) of the solution in the crystallizer (1) ; and the crystals formed are taken from the lower part of the crystallizer (1) by separating them from the solution, characterized by the fact that substantially vertical reintroduction (16, 17) of the recycled solution into the volume of solution contained in the crystallizer (1) is ensured, and in that this reintroduction (16, 17) is maintained just below the free surface ($10_m$, $10_M$) of the solution in the crystallizer (1) whatever the level of this free surface.

2. A process of crystallization according to claim 1, characterized by the fact that the crystals are recovered by a tapping (11) from the recycled solution (8) at the exit in the lower part (3) of the crystallizer (1), and in that the solution separated from the crystals (at 12) is re-injected (at 14) into the recycled solution (8) before its passage through the heat exchanger (7).

3. A process of crystallization according to claim 1, characterized by the fact that the crystals are collected by decanting, at the lower part (3) of the crystallizer (1), in a crystallization leg (19) ; in that the crystals are recovered by a tapping of the crystallization leg (19) between the two ends thereof ; and in that the solution separated from the crystals is re-injected (at 14) into the lower end of the crystallization leg (19), for creating a slight countercurrent.

4. Apparatus for carrying out the method according to any one of claims 1 to 3 comprising :

a crystallizer (1) containing a volume of solution to be crystallized carried at a temperature adjacent its boiling point, the level of the free surface (10) of the solution in the crystallizer (1) occurring between the lower and upper parts (3, 4) of said crystallizer (1),

a decompression device (6) connected to the upper part (4) of the crystallizer (1), above the free surface (10) of the solution,

a vapour evacuation conduit (5) opening into the upper part (4) of the crystallizer (1) and connected to a re-heating heat exchanger (7),

a recompression pump (6) mounted on the vapour evacuation conduit (5) and intended to ensure the mechanical recompression of the vapour collected in the upper part (4) of the crystallizer (1) before it enters the heat exchanger (7),

a solution recycling conduit (8) having its entrance in the lover part (3) of the crystallizer (1) and its exit in the crystallizer (1) between the lower and upper parts (3, 4) thereof, and on which is mounted the re-heating heat exchanger (7), the solution entering the recycling conduit (8) at the lower part (3) of the crystallizer (1) being re-heated by the recompressed vapour before being re-introduced into the crystallizer,

crystal separation means (12), fed with solution from the lower part (3) of the crystallizer (1) by a tapping conduit (11), and connected to a crystal evacuation conduit (13) as well as to a re-injection conduit (14) for the solution separated from the crystals by said means (12), characterized by the fact that the exit of the recycling conduit (8) is delimited by a mouth (16) which is arranged in the crystallizer (1) and opens upwardly therein, the device also comprising at least one level-defining extenders (17) intended to be connected, if need arises, to the mouth (16), the recycled solution being re-introduced into the volume of solution present in the crystallizer (1) slightly below the level of the free surface ($10_m$, $10_M$) of this volume of solution in the crystallizer (1).

5. A device according to claim 4, characterized by the fact that the crystallizer (1) has the form of a body of revolution and that the exit of the recycling conduit (8) is disposed along the axis of the crystallizer (1).

6. A crystallization device according to one of claims 4 and 5, characterized by the fact that it comprises several extenders (17) intended to be mounted end to end on the mouth (16) as a function of the level of the free surface ($10_m$,

10$_M$) of the solution in the crystalizer (1).

7. A crystallization device according to one of claims 4 to 6, characterized by the fact that the mouth (16) carries fixing means complementary with fixing means carried by each extender (17).

8. A crystallization device according to claims 6 and 7 taken together, characterized by the fact that each extender (17) carries fixing means complementary with fixing means carried by another extender (17).

9. A crystallization device according to one of claims 4 to 8, characterized by the fact that the tapping conduit (11) and the re-injection conduit (14) connect the separation means (12) to the recycling conduit (8) between the crystallizer (1) and the heat exchanger (7), the tapping conduit (11) opening into the recycling conduit (8) upstream of the point where the re-injection conduit (14) opens into this conduit (8).

10. A device according to one of claims 4 to 8, characterized by the fact that it comprises a crystallization leg (19) which extends under the crystallizer (1) and opens therein by its upper end, the tapping conduit (11) which connects the separation means (12) to the crystallization leg (19) opening into the central part of the latter whilst the re-injection conduit (14) connects the separation means (12) to the lower end of the crystallization leg (19) in which it opens axially for generating a countercurrent.

**Patentansprüche**

1. Verfahren zur Kristallisation einer Lösung mit wenigstens einem kristallisierbaren Produkt, bei dem in einen Kristallisator (1) die zu kristallisierende Lösung mit einer Temperatur in der Nähe ihrer Verdampfungstemperatur für den im Kristallisator herrschenden, verringerten Druck eingegeben wird ; wobei der verringerte Druck über der freien Oberfläche (10) der zu kristallisierenden Lösung im Kristallisator aufrechterhalten wird ; bei dem kontinuierlich die zu kristallisierende Lösung durch Entnahme im unteren Teil (3) des Kristallisators (1), dann Wiedererwärmung in einem Wärmetauscher (7), in dem die Lösung in einem wärmetauschenden Zustand mit dem Dampf ist, der im oberen Teil (4) des Kristallisators (1) gesammelt wurde und rückverdichtet ist, und schließlich durch Rückführen der wiedererwärmten Lösung in den Kristallisator (1) etwas unter dem Niveau der freien Oberfläche (10) der Lösung im Kristallisator (1) umgewälzt wird ; und bei dem im unteren Teil des Kristallisators (1) die entstandenen Kristalle durch Abscheiden aus der Lösung entnommen werden, dadurch gekennzeichnet, daß eine im wesentlichen vertikale Rückführung (16, 17) der umgewälzten Lösung in das Volumen der im Kristallisator (1) enthaltenen Lösung sichergestellt wird, und daß diese Rückführung (16, 17) geringfügig unter die freie Oberfläche (10$_m$, 10$_M$) der Lösung im Kristallisator beibehalten wird, wie auch immer das Niveau dieser freien Oberfläche ist.

2. Kristallisationsverfahren nach Anspruch 1, dadurch gekennzeichnet, daß die Kristalle durch Anstechen (11) der umgewälzten Lösung (8) am Ausgang am unteren Teil (3) des Kristallisators (1) gewonnen werden, und daß (bei 14) die von den Kristallen (bei 12) getrennte Lösung in die umgewälzte Lösung (8) vor deren Durchgang durch den Wärmetauscher (7) wieder eingeführt wird.

3. Kristallisationsverfahren nach Anspruch 1, dadurch gekennzeichnet, daß die Kristalle durch Absetzen im unteren Teil (3) des Kristallisators (1) in einer Kristallisationssäule (19) gesammelt werden ; daß die Kristalle durch Anstechen der Kristallisationssäule (19) zwischen den beiden Enden der letzteren gewonnen werden, und daß (bei 14) die von den Kristallen abgesonderte Lösung in das untere Ende der Kristallisationssäule (19) zur Bildung eines geringfügigen Gegenstroms wieder eingeführt wird.

4. Vorrichtung zur Durchführung des Verfahrens nach einem der Ansprüche 1 bis 3, mit :
   einem Kristallisator (1),
   einer Vorrichtung (6) zur Erzeugung eines Unterdrucks, die mit dem oberen Teil (4) des Kristallisators (1), oberhalb der freien Oberfläche (10) der Lösung, verbunden ist,
   einer Dampf-Absaugleitung (5), die in den oberen Teil des Kristallisators (1) mündet und mit einem Wiedererwärmungs-Wärmetauscher (7) verbunden ist,
   einer Wiederverdichtungspumpe (6), die an der Dampf-Absaugleitung (5) angeordnet ist und die dazu bestimmt ist, die mechanische Wiederverdichtung des im oberen Teil (4) des Kristallisators (1) gesammelten Dampfes vor dem Eintreten in den Wärmetauscher (7) sicherzustellen,
   einer Lösungs-Umwälzleitung (8), die mit ihrem Eingang in den unteren Teil (3) des Kristallisators (1) und mit ihrem Ausgang zwischen den unteren und oberen Teilen (3, 4) des Kristallisators (1) in letzteren mündet, und an der der Wiedererwärmungs-Wärmetauscher (7) angeordnet ist,
   einem Kristall-Trennelement (12), das durch eine Stichleitung (11) mit vom unteren Teil (3) des Kristallisators (1) herkommender Lösung gespeist wird und mit einer Kristall-Absaugleitung (13) sowie mit einer Wiedereinführungsleitung (14) für die von den Kristallen durch das Element (12) abgesonderte Lösung verbunden ist, dadurch gekennzeichnet, daß der Ausgang der Umwälzleitung (8) durch ein Ansatzstück (16) gegeben ist, das im Kristallisator (1) angeordnet ist und nach oben in den letzteren mündet, wobei die Vorrichtung gleichfalls wenigstens eine Verlängerung (17) zum Einstellen auf den Pegel enthält, die dazu bestimmt ist, bei Bedarf mit dem Ansatzstück (16) verbunden zu werden.

5. Vorrichtung nach Anspruch 4, dadurch gekennzeichnet, daß der Kristallisator (1) die Form eines Drehbehälters hat, und daß der Ausgang der Umwälzleitung (8) in der Achse des Kristallisators (1) angeordnet ist.

6. Kristallisationsvorrichtung nach einem der Ansprüche 4 oder 5, dadurch gekennzeichnet, daß sie mehrere Verlängerungen (17) aufweist,

die dazu bestimmt sind, aneinander am Ansatzstück (16) in Abhängigkeit vom Niveau der freien Oberfläche (10$_m$, 10$_M$) der Lösung im Kristallisator (1) angesetzt zu werden.

7. Kristallisationsvorrichtung nach einem der Ansprüche 4 bis 6, dadurch gekennzeichnet, daß das Ansatzstück (16) Verbindungseinrichtungen aufweist, die zu den Verbindungseinrichtungen jeder der Verlängerungen (17) komplementär sind.

8. Kristallisationsvorrichtung nach den beiden Ansprüchen 6 und 7, dadurch gekennzeichnet, daß jede Verlängerung (17) Verbindungseinrichtungen aufweist, die zu den Verbindungseinrichtungen einer anderen Verlängerung (17) komplementär sind.

9. Kristallisationsvorrichtung nach einem der Ansprüche 4 bis 8, dadurch gekennzeichnet, daß die Stichleitung (11) und die Wiedereinführungsleitung (14) das Trennelement (12) mit der Umwälzleitung (8) zwischen dem Kristallisator (1) und dem Wärmetauscher (7) verbinden, wobei die Stichleitung (11) oberhalb des Punktes in die Umwälzleitung (8) mündet, an dem die Wiedereinführungsleitung (14) in diese Leitung (8) einmündet.

10. Vorrichtung nach einem der Ansprüche 4 bis 8, dadurch gekennzeichnet, daß sie eine Kristallisationssäule (19) aufweist, die sich unter dem Kristallisator (1) erstreckt und in letzteren mit ihrem oberen Ende mündet, wobei die Stichleitung (11), die das Trennelement (12) mit der Kristallisationssäule (19) verbindet, in deren mittleren Teil einmündet, während die Wiedereinführungsleitung (14) das Trennelement (12) mit dem unteren Teil der Kristallisationssäule (19) verbindet, in den sie axial mündet, um einen Gegenstrom zu erzeugen.

FIG. 1

FIG. 2

FIG. 3

0 139 573